# EUROPÄISCHE PATENTANMELDUNG

(11) **EP 2 824 155 A1**
(43) Veröffentlichungstag der Anmeldung: **14.01.2015**
(21) Anmeldenummer: 13175674.4
(22) Anmeldetag: 09.07.2013
(51) Int. Cl.: C09J 133/00

(54) **Reaktionsharz-Zusammensetzung und deren Verwendung**

(71) Anmelder: HILTI Aktiengesellschaft, 9494 Schaan (LI)
(72) Erfinder: Pfeil, Armin, 86916 Kaufering (DE)
(74) Vertreter: Hilti Aktiengesellschaft Corporate Intellectual Property

(57) **Zusammenfassung**

Es wird eine Reaktionsharz-Zusammensetzung mit einem Harzbestandteil, der eine radikalisch polymerisierbare Verbindung enthält, und einem Initiatorsystem, das einen α-Halogencarbonsäureester und ein Katalysatorsystem, welches ein Kupfer(I)salz und wenigstens einen Stickstoff-enthaltenden Liganden umfasst, enthält und deren Verwendung für bauliche Zwecke beschrieben.

## Beschreibung

Die vorliegende Erfindung betrifft eine radikalisch härtbare Reaktionsharz-Zusammensetzung mit einem Harzbestandteil und einem Initiatorsystem, das einen Initiator und ein Katalysatorsystem, welches in der Lage ist, *in-situ* einen Übergangsmetallkomplex als Katalysator zu bilden, umfasst, sowie die Verwendung der Zusammensetzung zu baulichen Zwecken, insbesondere zur Verankerung von Verankerungselementen in Bohrlöchern.

Die Verwendung von Reaktionsharz-Zusammensetzungen auf der Basis von ungesättigten Polyesterharzen, Vinylesterharzen oder von Epoxidharzen als Klebe- und Haftmittel, ist seit langem bekannt. Es handelt sich dabei um Zweikomponentensysteme, wobei eine Komponente die Harzmischung und die andere Komponente das Härtungsmittel enthält. Andere, übliche Bestandteile wie Füllmittel, Beschleuniger, Stabilisatoren, Lösungsmittel einschließlich Reaktivlösungsmittel (Reaktivverdünner) können in der einen und/oder der anderen Komponente enthalten sein. Durch Vermischen der beiden Komponenten wird dann die Reaktion unter Bildung eines gehärteten Produktes in Gang gebracht.

Die Mörtelmassen, welche in der chemischen Befestigungstechnik Verwendung finden sollen, sind komplexe Systeme, an die besondere Anforderungen gestellt werden, wie beispielsweise die Viskosität der Mörtelmasse, die Aushärtung und Durchhärtung in einem relativ breiten Temperaturbereich, gewöhnlich -10°C bis +40°C, die Eigenfestigkeit der ausgehärteten Masse, Haftung auf unterschiedlichen Untergründen und Umgebungsbedingungen, Lastwerte, Kriechfestigkeit und dergleichen.

Grundsätzlich kommen in der chemischen Befestigungstechnik zwei Systeme zum Einsatz. Eines auf Basis radikalisch polymerisierbarer, ethylenisch ungesättigter Verbindungen, die in der Regel mit Peroxiden gehärtet werden, und eines auf Epoxid-Amin-Basis.

Organische, härtbare zweikomponentige Reaktionsharz-Zusammensetzungen auf der Grundlage von härtbaren Epoxidharzen und Aminhärtern werden als Klebstoffe, Spachtelmassen zur Rissverfüllung und unter anderem zur Befestigung von Konstruktionselementen, wie Ankerstangen, Betoneisen (Bewehrungseisen), Schrauben und dergleichen, in Bohrlöchern verwendet. Derartige Mörtelmassen sind beispielsweise aus der EP 1 475 412 A2, der DE 198 32 669 A1 und der DE 10 2004 008 464 A1 bekannt.

Ein Nachteil der bekannten Mörtelmassen auf Epoxidbasis liegt im Einsatz von oft erheblichen Mengen an ätzenden Aminen als Härter, wie Xylylendiamin (XDA), insbesondere das m-Xylylendiamin (mXDA; 1,3-Benzoldimethanamin), und/oder an aromatischen Alkoholverbindungen, wie freie Phenole, z.B. Bisphenol A, was ein Gesundheitsrisiko für den Anwender bedeuten kann. Diese Verbindungen sind in zum Teil recht erheblichen Mengen, d.h. bis zu 50% in den jeweiligen Komponenten von Mehrkomponenten-Mörtelmassen enthalten, so dass vielfach eine Kennzeichnungspflicht der Verpackung besteht, die zu einer geringeren Anwenderakzeptanz des Produkts führt. In den letzten Jahren wurden in einigen Ländern Grenzwerte eingeführt, bis zu welchem Gehalt beispielsweise mXDA oder Bisphenol A in den Produkten enthalten sein dürfen bzw. dann gekennzeichnet werden müssen oder überhaupt noch in Produkten enthalten sein dürfen.

Radikalisch härtbare Systeme, insbesondere bei Raumtemperatur härtbare Systeme benötigen sogenannte Radikalstarter, auch Initiatoren genannt, damit die radikalische Polymerisation ausgelöst werden kann. Im Bereich der chemischen Befestigungstechnik haben sich aufgrund ihrer Eigenschaften die in der Anmeldung DE 3226602 A1 beschriebene Härterzusammensetzung, umfassend Benzoylperoxid als Radikalstarter und eine aminischen Verbindung als Beschleuniger, und die in der Anmeldung EP 1586569 A1 beschriebene Härterzusammensetzung, umfassend einen Perester als Härter und eine Metallverbindung als Beschleuniger, durchgesetzt. Diese Härterzusammensetzungen erlauben auch bei sehr tiefen Temperaturen bis -30°C eine schnelle und recht vollständige Aushärtung. Darüber hinaus sind diese Systeme hinsichtlich der Mischungsverhältnisse von Harz und Härter robust. Somit sind sie für die Verwendung unter Baustellenbedingungen geeignet.

Nachteilig an diesen Härterzusammensetzungen jedoch ist, dass in beiden Fällen Peroxide als Radikalstarter verwendet werden müssen. Diese sind thermisch sensibel und reagieren sehr empfindlich auf Verunreinigungen. Dies führt zu erheblichen Einschränkungen bei der Formulierung von pastösen Härterkomponenten vor allem für Injektionsmörtel hinsichtlich Lagertemperaturen, Lagerstabilitäten und der Auswahl geeigneter Komponenten. Um den Einsatz von Peroxiden, wie Dibenzoylperoxid, Perestern und dergleichen, zu ermöglichen, werden zu deren Stabilisierung Phlegmatisierungsmittel, wie Phthalate oder Wasser, zugegeben. Diese wirken als Weichmacher und beeinträchtigen damit signifikant die mechanische Stärke der Harzmischungen.

Ferner sind diese bekannten Härterzusammensetzungen insofern nachteilig, als sie erhebliche Peroxidmengen enthalten müssen, was problematisch ist, weil peroxidhaltige Produkte ab einer Konzentration von 1 %, etwa für Dibenzoylperoxid, in einigen Ländern als sensibilisierend gekennzeichnet werden müssen. Ähnliches gilt auch für die aminischen Beschleuniger, die zum Teil ebenfalls kennzeichnungspflichtig sind.

Bisher sind nur wenige Versuche unternommen worden, peroxidfreie Systeme auf Basis radikalisch polymerisierbarer Verbindungen zu entwickeln. Aus der DE 10 2011 078 785 A1 ist eine peroxidfreie Härterzusammensetzung für radikalisch polymerisierbare Verbindungen bekannt, die eine 1,3-Dicarbonylverbindung als Härter und eine Manganverbindung als Beschleuniger enthält sowie deren Verwendung für Reaktionsharz-Zusammensetzungen auf Basis radikalisch härtbarer Verbindungen. Dieses System neigt jedoch dazu, unter bestimmten Bedingungen nicht ausreichend durchzuhärten, was zu einer verminderten Leistungsfähigkeit der ausgehärteten Masse insbesondere für die Anwendung als Dübelmasse führen kann, so dass hier zwar eine Anwendung für Dübelmassen im Allgemeinen möglich ist, jedoch nicht für solche Anwendungen, bei denen zuverlässig recht hohe Lastwerte erforderlich sind.

Bei den beiden beschriebenen Systemen ist ferner nachteilig, dass jeweils ein definiertes Verhältnis von Harzkomponente und Härterkomponente (im Folgenden auch kurz als Mischungsverhältnis bezeichnet) eingehalten werden muss, damit die Bindemittel vollständig aushärten und die geforderten Eigenschaften der ausgehärteten Massen erreichen können. Viele der bekannten Systeme sind wenig robust, was das Mischungsverhältnis anbelangt und reagieren teilweise recht empfindlich auf Mischungsschwankungen, was sich in den Eigenschaften der ausgehärteten Massen niederschlägt.

Eine andere Möglichkeit, eine radikalische Polymerisation ohne den Einsatz von Peroxiden zu initiieren, liefert das in der makromolekularen Synthesechemie häufig eingesetzte ATRP-Verfahren (= Atom Transfer Radical Polymerisation). Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenisch ungesättigte Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Diese Reaktionsführung wird beispielsweise von J-S. Wang, et al., J. Am. Chem. Soc., vol. 117, p. 5614-5615 (1995), von Matyjaszewski, Macromolecules, vol. 28, p. 7901-7910 (1995) beschrieben. Darüber hinaus offenbaren die Veröffentlichungen WO 96/30421 A1, WO 97/47661 A1, WO 97/18247 A1, WO 98/40415 A1 und WO 99/10387 A1 Varianten der zuvor erläuterten ATRP.

Die ATRP war lange von wissenschaftlichem Interesse und wird im Wesentlichen dazu eingesetzt, die Eigenschaften von Polymeren gezielt zu steuern und an die gewünschten Anwendungen anzupassen. Hierzu zählen die Kontrolle der Teilchengröße, der Struktur, der Länge, des Gewichts und der Gewichtsverteilung von Polymeren. Dementsprechend kann der Aufbau des Polymers, das Molekulargewicht und die Molekulargewichtsverteilung gesteuert werden. Die ATRP erlangt dadurch zunehmend auch wirtschaftliches Interesse. So beschreiben die U.S. Patente Nr. 5,807,937 und 5,763,548 (Co)polymere, die mittels ATRP hergestellt wurden und die für eine Vielzahl an Anwendungen nützlich sind, wie Dispergiermittel und grenzflächenaktive Substanzen.

Bisher wurde das ATRP-Verfahren allerdings nicht dazu eingesetzt, eine Polymerisation vor Ort, etwa auf der Baustelle unter den dort herrschenden Bedingungen durchzuführen, wie es für bauliche Anwendung, z.B. Mörtel-, Klebe- und Dübelmassen erforderlich ist. Die Anforderungen, welche bei diesen Anwendungen an die polymerisierbaren Zusammensetzungen gestellt werden, nämlich Initiierung der Polymerisation im Temperaturbereich zwischen -10°C und +60°C, anorganisch gefüllte Zusammensetzungen, Einstellung einer Gelzeit mit anschließender schneller und möglichst vollständiger Polymerisation des Harzbestandteils, die Konfektionierung als Ein- oder Mehrkomponentensysteme und die sonstigen bekannten Anforderungen an die ausgehärtete Masse, werden bisher in der umfangreichen Literatur zur ATRP nicht berücksichtigt.

Der Erfindung liegt daher die Aufgabe zugrunde, eine Reaktionsharz-Zusammensetzung für Mörtelsysteme der eingangs beschriebenen Art bereitzustellen, welches die genannten Nachteile der bekannten Systeme nicht aufweist, welche insbesondere als Zweikomponentensystem konfektioniert werden kann, über Monate hinweg lagerstabil ist und bei den für Reaktionsharzmörtel üblichen Anwendungstemperaturen, d.h. zwischen -10°C und +60°C zuverlässig aushärtet, d.h. kalthärtend ist.

Der Erfinder hat überraschend herausgefunden, dass die Aufgabe gelöst werden kann, indem für die oben beschriebenen Reaktionsharz-Zusammensetzungen auf Basis radikalisch polymerisierbarer Verbindungen ATRP-Initiatorsysteme als Radikalinitiator und eingesetzt werden.

Zum besseren Verständnis der Erfindung werden zunächst die folgenden Erläuterungen der hierin verwendeten Terminologie als sinnvoll erachtet. Im Sinne der Erfindung bedeutet:
- *"kalthärtend",* dass die Polymerisation, hierin auch gleichbedeutend als *"Härtung"* bezeichnet, der beiden härtbaren Verbindungen bei Raumtemperatur ohne zusätzlichen Energieeintrag, etwa durch Wärmezufuhr, durch die in den Reaktionsharz-Zusammensetzungen enthaltenen Härtungsmitteln, gegebenenfalls in Anwesenheit von Beschleunigern, gestartet werden kann und auch eine für die geplanten Anwendungszwecke ausreichende Durchhärtung zeigen;
- *"reaktionsinhibierend getrennt",* dass eine Trennung zwischen Verbindungen bzw. Komponenten derart erreicht wird, dass eine Reaktion untereinander erst erfolgen kann, wenn die Verbindungen bzw. Komponenten etwa durch Mischen miteinander in Kontakt gebracht werden; eine reaktionsinhibierende Trennung ist auch durch eine (Mikro)verkapselung einer oder mehrerer Verbindungen bzw. Komponenten denkbar;
- *"Härtungsmittel"* Stoffe, welche die Polymerisation (das Härten) des Grundharzes bewirken;
- *"aliphatische Verbindung"* eine acyclische und cyclische, gesättigte oder ungesättigte Kohlenwasserstoffverbindung, die nicht aromatisch ist (PAC, 1995, 67, 1307; Glossary of class names of organic compounds and reactivity intermediates based on structure (IUPAC Recommendations 1995));
- *"Beschleuniger"* eine zur Beschleunigung der Polymerisationsreaktion (Härtung) fähige Verbindung, die dazu dient, die Bildung des Radikalstarters zu beschleunigen;
- *"Polymerisationsinhibitor",* hierin gleichbedeutend auch als *"Inhibitor"* bezeichnet, eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden (oftmals als Stabilisator bezeichnet) und die dazu dient, den Start der Polymerisationsreaktion unmittelbar nach der Zugabe des Härtungsmittels zu verzögern; um den Zweck der Lagerstabilität zu erreichen, wird der Inhibitor üblicherweise in so geringen Mengen eingesetzt, dass die Gelzeit nicht beeinflusst wird; um den Zeitpunkt des Starts der Polymerisationsreaktion zu beeinflussen, wird der Inhibitor üblicherweise in solchen Mengen eingesetzt, dass die Gelzeit beeinflusst wird;
- *"Reaktivverdünner"* flüssige oder niedrigviskose Monomere und Grundharze, welche andere Grundharze oder den Harzbestandteil verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden.
- *"Gelzeit"* für ungesättigte Polyester- oder Vinyl-Harze, die gewöhnlich mit Peroxiden gehärtet werden, entspricht die Zeit der Härtungsphase des Harzes der Gelzeit, in der sich die Temperatur des Harzes von +25°C auf +35°C erhöht; dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- *"Zweikomponentensystem"* ein System, das zwei voneinander getrennt gelagerte Komponenten, im Allgemeinen eine Harz- und eine Härterkomponente, umfasst, so dass eine Härtung der Harzkomponente erst nach dem Mischen der beiden Komponenten erfolgt;
- *"Mehrkomponentensystem"* ein System, das drei oder mehrere voneinander getrennt gelagerte Komponenten umfasst, so dass eine Härtung der Harzkomponente erst nach dem Mischen aller Komponenten erfolgt;
- *"(Meth)acryl...*/*...(meth)acryl...",* dass sowohl die "Methacryl.../...methacryl..."- als auch die "Acryl.../...acryl..."-Verbindungen umfasst sein sollen.

Der Erfinder hat herausgefunden, dass sich unter den für bauliche Anwendungen vorherrschenden Reaktionsbedingungen radikalisch polymerisierbare Verbindungen mit einer Kombination aus bestimmten Verbindungen, wie sie für die Initiierung der ATRP Verwendung finden, polymerisieren lassen. Damit ist es möglich, eine Reaktionsharz-Zusammensetzung bereitzustellen, die kalthärtend ist, die die an Reaktionsharz-Zusammensetzungen für die Verwendung als Mörtel-, Klebe- oder Dübelmassen gestellten Anforderungen erfüllt und die insbesondere als Zwei- oder Mehrkomponentensystem konfektioniert, lagerstabil ist.

Ein erster Gegenstand der Erfindung ist daher eine Reaktionsharz-Zusammensetzung mit einem Harzbestandteil, der eine radikalisch polymerisierbare Verbindung enthält, und einem Initiatorsystem, das einen α-Halogencarbonsäureester und ein Katalysatorsystem, welches ein Kupfer(I)salz und wenigstens einen Stickstoff-enthaltenden Liganden umfasst, enthält.

Damit können Reaktionsharz-Zusammensetzungen bereitgestellt werden, die frei von Peroxiden und kritischen Aminverbindungen und somit nicht mehr kennzeichnungspflichtig sind. Des Weiteren enthalten die Zusammensetzungen keine in der ausgehärteten Masse als Weichmacher fungierenden Phlegmatisierungsmittel mehr. Ein weiterer Vorteil der Erfindung liegt darin, dass die Zusammensetzung, wenn sie als Zweikomponenten-System konfektioniert wird, ein beliebiges Verhältnis der beiden Komponenten zueinander zulässt, wobei das Initiatorsystem homogen gelöst in den Komponenten vorliegt, so dass auch nur eine niedrige Konzentration davon erforderlich ist.

Das Initiatorsystem umfasst erfindungsgemäß einen Initiator und ein Katalysatorsystem.

Der Initiator ist zweckmäßig eine Verbindung, die über eine Halogen-Kohlenstoff-Bindung verfügt, die durch eine katalysierte homolytische Spaltung C-Radikale liefert, die eine radikalische Polymerisation starten können. Damit eine ausreichend lange Lebensdauer des Radikals gewährleistet ist, muss der Initiator über Substituenten verfügen, die das Radikal stabilisieren können wie z.B. Carbonyl-Substituenten. Einen weiteren Einfluss auf die Initiierung übt das Halogenatom aus.

Das aus dem Initiator gebildete Primärradikal weist bevorzugt eine ähnliche Struktur auf wie das Radikalzentrum der wachsenden Polymerkette. Wenn es sich also bei den Reaktionsharz-Zusammensetzungen um Methacrylatharze oder Acrylatharze handelt, sind α-Halogencarbonsäureester der Isobutansäure oder der Propansäure besonders geeignet. Im Einzelfall sollte aber die besondere Eignung immer durch Versuche ermittelt werden.

Für die Anwendung der Reaktionsharz-Zusammensetzung als bauliche Klebe-, Mörtel- oder Dübelmasse insbesondere für mineralische Untergründe hat sich eine Verbindungsklasse als besonders geeignet erwiesen. Dementsprechend ist erfindungsgemäß der Initiator ein α-Halogencarbonsäureester der allgemeinen Formel (I) 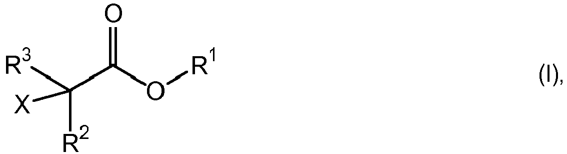 in der
- X: Chlor, Brom oder Iod, bevorzugt Chlor oder Brom, besonders bevorzugt Brom bedeutet;
- R¹: für eine geradkettige oder verzweigte, gegebenenfalls substituierte C₁-C₂₀-Alkylgruppe, bevorzugt C₁-C₁₀-Alkylgruppe, oder eine Arylgruppe steht; oder für den Rest eines acylierten, verzweigten, dreiwertigen Alkohols, den Rest eines vollständig oder partiell acylierten, linearen oder verzweigten, vierwertigen Alkohols, den Rest eines vollständig oder partiell acylierten, linearen fünf-oder sechswertigen Alkohols, den Rest einer vollständig oder partiell acylierten, linearen oder cyclischen C₄-C₆-Aldose oder C₄-C₆-Ketose oder den Rest eines vollständig oder partiell acylierten Disaccharids steht, und Isomere dieser Verbindungen;
- R² und R³: unabhängig voneinander für Wasserstoff, eine C₁-C₂₀-Alkylgruppe, bevorzugt C₁-C₁₀-Alkylgruppe und stärker bevorzugt C₁-C₆-Alkylgruppe, oder eine C₃-C₈-Cycloalkylgruppe, C₂-C₂₀-Alkenyl- oder -Alkinylgruppe, bevorzugt C₂-C₆-Alkenylgruppe oder -Alkinylgruppe, Oxiranylgruppe, Glycidylgruppe, Arylgruppe, Heterocyclylgruppe, Aralkylgruppe, Aralkenylgruppe (aryl-substituierte Alkenylgruppen) stehen.

Derartige Verbindung sowie deren Herstellung sind dem Fachmann bekannt. In dieser Hinsicht wird Bezug genommen auf die Veröffentlichungen WO 96/30421 A1 und WO 00/43344 A1, deren Inhalt hiermit in diese Anmeldung aufgenommen wird.

Geeignete Initiatoren umfassen beispielsweise C₁-C₆-Alkylester einer α-Halo-C₁-C₆-Carbonsäure, wie α-Chlorpropionsäure, α-Brompropionsäure, α-Chlor-*iso*-butansäure, α-Brom-*iso*-butansäure und dergleichen

Bevorzugt sind Ester der α-Brom-iso-butansäure. Beispiele geeigneter α-Brom-*iso-*butansäureester sind: Bis[2-(2'-brom-iso-butyryloxy)ethyl]disulfid, Bis[2-(2-brom-*iso-*butyryloxy)undecyl]disulfid, α-Brom-iso-butyrylbromid, 2-(2-Brom-*iso-*butyryloxy)ethylmethacrylate, *tert*-Butyl-α-brom-*iso*-butyrat, 3-Butynyl-2-brom-*iso*-butyrat, Dipentaerythritolhexakis(2-brom-*iso*-butyrat), Dodecyl-2-brom-*iso*-butyrat, Ethyl-α-brom-*iso*-butyrat, Ethylenbis(2-brom-*iso*-butyrat), 2-Hydroxyethyl-2-brom-*iso*-butyrat, Methyl-α-brom-*iso*-butyrat, Octadecyl-2-brom-iso-butyrat, Pentaerythritoltetrakis(2-brom-*iso*-butyrat), Poly(ethylenglykol)bis(2-brom-*iso*-butyrate), Poly(ethylenglykol)methylether-2-brom-*iso-*butyrate, 1,1,1-Tris(2-brom-*iso*-butyryloxymethyl)ethan, 10-Undecenyl 2-brom-*iso*-butyrat.

Das Katalysatorsystem besteht erfindungsgemäß aus einem Kupfersalz und mindestens einem Liganden.

Zweckmäßig muss das Kupfer an einem Ein-Elektronen-Redoxprozess teilnehmen können, eine hohe Affinität zu einem Halogenatom, insbesondere Brom, haben und es sollte in der Lage sein, reversibel seine Koordinationszahl um eins zu erhöhen. Ferner sollte es zur Komplexbildung neigen.

Der Ligand trägt zweckmäßig zur Löslichkeit des Kupfersalzes in der zu verwendenden radikalisch polymerisierbaren Verbindung bei, sofern das Kupfersalz selbst noch nicht löslich ist und vermag das Redoxpotential des Kupfers in Bezug auf Reaktivität und Halogentransfer einzustellen.

Damit von dem Initiator Radikale abgespalten werden können, welche die Polymerisation der radikalisch polymerisierbaren Verbindungen initiieren, ist eine Verbindung erforderlich, welche die Abspaltung ermöglicht bzw. steuert, insbesondere beschleunigt. Mit einer geeigneten Verbindung wird es möglich, eine bei Raumtemperatur härtende Reaktionsharzmischung bereitzustellen.

Zweckmäßig ist diese Verbindung ein geeigneter Übergangsmetallkomplex, der die Bindung zwischen dem α-Kohlenstoffatom und dem daran angebundenen Halogenatom des Initiators homolytisch zu spalten vermag. Ferner muss der Übergangsmetallkomplex fähig sein, an einem reversiblen Redoxzyklus mit dem Initiator, einem schlafenden Polymerkettenende, einem wachsenden Polymerkettenende oder einer Mischung davon teilzunehmen.

Erfindungsgemäß ist diese Verbindung ein Kupfer(I)komplex der allgemeinen Formel Cu(I)-X·L, der aus einem Kupfer(I)salz und einem geeigneten Ligand (L) gebildet wird. Kupfer(I)-Verbindungen sind häufig jedoch sehr oxidationsempfindlich, wobei sie bereits durch Luftsauerstoff in Kupfer(II)-Verbindungen umgewandelt werden können.

Wird die Reaktionsharzmischung direkt vor deren Verwendung hergestellt, d.h. deren Komponenten vermischt, ist die Verwendung von Kupfer(I)komplexen im Allgemeinen nicht kritisch. Soll allerdings eine über einen gewissen Zeitraum lagerstabile Reaktionsharzmischung bereitgestellt werden, kommt es stark auf die Stabilität des Kupfer(I)komplexes gegenüber Luftsauerstoff oder anderen gegebenenfalls in der Reaktionsharzmischung enthaltenen Bestandteilen an.

Um eine lagerstabile Reaktionsharzmischung bereitzustellen, ist es daher erforderlich das Kupfersalz in stabiler Form einzusetzen. Dies kann durch die Verwendung eines oxidationsstabilen Kupfer(I)salzes erreicht werden, wie etwa den 1,4-Diazabicyclo[2.2.2]octankupfer(I)chlorid-Komplex (CuCl·DABCO-Komplex). In diesem Zusammenhang bedeutet *"oxidationsstabil",* dass das Kupfer(I)salz ausreichend stabil gegenüber Luftsauerstoff sind und nicht zu höherwertigen Kupferverbindungen oxidiert wird. Häufig wird eine Aktivierung des oxidationsstabilen Kupfer(I)salzes erforderlich sein, um die Härtungsreaktion zu initiieren. Dies kann etwa durch die Zugabe geeigneter Liganden erreicht werden, welche die Liganden / Gegenionen des Kupfer(I)komplexes verdrängen. Bevorzugt, insbesondere hinsichtlich der Lagerstabilität, wird der Kupfer(I)-Komplex *in-situ* aus einem Kupfer(II)salz und einem geeigneten Liganden gebildet. Dazu enthält das Initiatorsystem ferner ein geeignetes Reduktionsmittel, wobei das Kupfer(II)salz und das Reduktionsmittel bevorzugt reaktionsinhibierend getrennt voneinander sind.

Geeignete Kupfer(II)salze sind solche, die in der verwendeten radikalisch polymerisierbaren Verbindung oder einem gegebenenfalls der Harzmischung zugegebenen Lösungsmittel, wie etwa ein Reaktivverdünner, löslich sind. Derartige Kupfer(II)salze sind beispielsweise Cu(II)(PF₆)₂, CuX₂, mit X=Cl, Br, I, wobei CuX₂ bevorzugt und CuCl₂ oder CuBr₂ mehr bevorzugt ist, Cu(OTf)₂ (-OTf = Trifluormethansulfonat, CF₃SO₃⁻) oder Cu(II)-Carboxylate. Besonders bevorzugt sind solche Kupfer(II)salze, welche abhängig von der verwendeten radikalisch polymerisierbaren Verbindung schon ohne Ligandenzusatz in dieser löslich sind.

Geeignete Liganden, insbesondere neutrale Liganden sind aus der Komplexchemie der Übergangsmetalle bekannt. Sie sind mit dem Koordinationszentrum unter Ausprägung von verschiedenen Bindungstypen koordiniert, z.B. σ-, π-, µ-, η-Bindungen. Durch die Wahl des Liganden lässt sich die Reaktivität des Kupfer(I)komplexes gegenüber dem Initiator einstellen sowie die Löslichkeit des Kupfer(I)-Salzes verbessern.

Erfindungsgemäß ist der Ligand ein Stickstoff-enthaltender Ligand. Zweckmäßig ist der Ligand ein Stickstoff-enthaltender Ligand, der ein, zwei oder mehr Stickstoffatome enthält, wie etwa mono-, bi- oder tridentate Liganden.

Geeignete Liganden sind Aminoverbindungen mit primären, sekundären und/oder tertiären Aminogruppen, wovon solche mit ausschließlich tertiären Aminogruppen bevorzugt sind, oder Aminoverbindungen mit heterocyclischen Stickstoffatomen, welche besonders bevorzugt sind.

Beispiele geeigneter Aminoverbindungen sind: Ethylendiaminotetraacetat (EDTA), N,N-Dimethyl-N',N'-bis(2-dimethylaminoethyl)ethylendiamin (Me6TREN), N,N'-Dimethyl-1,2-phenyldiamin, 2-(Methylamino)phenol, 3-(Methylamino)-2-butanol, N,N'-Bis(1,1-dimethylethyl)-1,2-ethandiamin oder N,N,N',N",N"-Pentamethyldiethylentriamin (PMDETA), und mono-, bi- oder tridentate heterocyclische Elektronen-Donor-Liganden, wie solche, die von unsubstituierten oder substituierten Heteroarenen abgeleitet sind, wie Furan, Thiophen, Pyrrol, Pyridin, Bipyridin, Picolylimin, γ-Pyran, γ-Thiopyran, Phenanthrolin, Pyrimidin, bis-Pyrimidin, Pyrazin, Indol, Coumarin, Thionaphthen, Carbazole, Dibenzofuran, Dibenzothiophen, Pyrazol, Imidazol, Benzimidazol, Oxazol, Thiazol, Bis-Thiazol, Isoxazol, Isothiazol, Chinolin, Bichinolin, Isochinolin, Biisochinolin, Acridin, Chroman, Phenazine, Phenoxazine, Phenothiazine, Triazine, Thianthren, Purin, Bismidazol und Bisoxazol.

Darunter ist 2,2'-Bipyridin, N-Butyl-2-pyridylmethanimine, 4,4'-Di-*tert*-butyl-2,2'-dipyridin, 4,4'-Dimethyl-2,2'-dipyridin, 4,4'-Dinonyl-2,2'-dipyridin, N-Dodecyl-N-(2-pyridylmethylen)amin, 1,1,4,7,10,10-Hexamtehyltriethylentetramin, N-Octadecyl-N-(2-pyridylmethylen)amin, N-Octyl-2-pyridylmethanimin, N,N,N',N",N"-Pentamethyldiethylentriamine, 1,4,8,11-Tetracyclotetradecan, N,N,N',N'-Tetrakis(2-pyridylmethyl)ethylendiamin, 1,4,8,11-Tetramethyl-1,4,8,11-tetraazacyclotetradecan, Tris[2-(diethylamino)ethyl]amin oder Tris(2-methylpyridyl)amin bevorzugt, wobei N,N,N',N",N"-Pentamethydiethyltriamin (PMDETA), 2,2'-Bipyridin (bipy) oder Phenanthrolin (phen) stärker bevorzugt sind.

Entgegen den Empfehlungen aus der wissenschaftlichen Literatur, die für die einzusetzende Menge an Stickstoff-enthaltenden Liganden in der Regel ein Verhältnis von Cu : Ligand = 1 : 2 als optimal beschreibt, hat der Erfinder überraschend herausgefunden, dass die Reaktionsharz-Zusammensetzung eine deutlich stärkere Reaktivität zeigt, d.h. schneller aushärtet und besser durchhärtet, wenn der Stickstoff-enthaltende Ligand im Überschuss eingesetzt wird. Hierbei bedeutet *"im Überschuss",* dass der Aminligand durchaus im Verhältnis Cu : Ligand = 1 : 5, oder gar bis 1 : 10 eingesetzt wird. Maßgeblich ist, dass dieser Überschuss sich wiederum nicht schädlich auf die Reaktion und die Endeigenschaften auswirken.

Ebenfalls entgegen den Empfehlungen aus der wissenschaftlichen Literatur, hat der Erfinder überraschend herausgefunden, dass die Reaktionsharz-Zusammensetzung unabhängig von der eingesetzten Menge eine deutlich stärkere Reaktivität zeigt, wenn der Ligand eine Stickstoff-enthaltende Verbindung mit primären Aminogruppen ist.

Dementsprechend ist in einer stärker bevorzugten Ausführungsform der Stickstoff-enthaltende Ligand ein Amin mit mindestens einer primären Aminogruppe. Das Amin ist zweckmäßig ein primäres Amin, das aliphatisch, einschließlich cycloaliphatisch, aromatisch und/oder araliphatisch sein kann und ein oder mehrere Amino-Gruppen (im Folgenden als Polyamin bezeichnet) tragen kann. Das Polyamin trägt bevorzugt mindestens zwei primäre aliphatische Amino-Gruppen. Ferner kann das Polyamin auch Amino-Gruppen tragen, die sekundären oder tertiären Charakter haben. Auch Polyaminoamide und Polyalkylenoxid-polyamine oder Aminaddukte, wie Amin-Epoxy Harzaddukte oder Mannichbasen sind ebenso geeignet. Als araliphatisch werden Amine definiert, die sowohl aromatische als auch aliphatische Reste enthalten.

Geeignete Amine, ohne den Umfang der Erfindung einzuschränken, sind beispielsweise: 1,2-Diaminoethan(ethylendiamin), 1,2-Propandiamin, 1,3-Propandiamin, 1,4-Diaminobutan, 2,2-Dimethyl-1,3-propandiamin (Neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1-Amino-3-aminomethyl-3,5,5-trimethylcyclohexan, 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPD)), Diaminodicyclohexylmethan (PACM), gemischte polycyclische Amine (MPCA) (z.B. Ancamine® 2168), Dimethyldiaminodicyclohexylmethan (Laromin® C260), 2,2-Bis(4-aminocyclohexyl)propan, (3(4),8(9)Bis(aminomethyl)dicyclo[5.2.1.0^{2,6}]decan (Isomerengemisch, tricyclischer primärer Amine; TCD-Diamin).

Bevorzugt sind Polyamine, wie 2-Methylpentandiamin (DYTEK A®), 1-Amino-3-aminomethyl-3,5,5-trimethylcyclohexan (IPD), 1,3-Benzoldimethanamin (m-Xylylendiamin, mXDA), 1,4-Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), 1,3-Bisaminomethylcyclohexan (1,3-BAC), (3(4),8(9)Bis(aminomethyl)dicyclo[5.2.1.0²,⁶]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(aminomethyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin.

Das Amin kann entweder alleine oder als Gemisch aus zweien oder mehreren davon eingesetzt werden.

Zur Bildung des Kupfer(I)-Komplexes wird, wenn ein Kupfer(II)salz verwendet wird, wie oben erläutert, ein Reduktionsmittel verwendet, das *in-situ* das Kupfer(II) zu einem Kupfer(I) zu reduzieren vermag.

Reduktionsmittel, welche im Wesentlichen ohne Bildung von Radikalen, die ihrerseits neue Polymerketten initiieren können, die Reduktion ermöglichen, können verwendet werden. Geeignete Reduktionsmittel sind etwa Ascorbinsäure und deren Derivate, Zinnverbindungen, reduzierende Zucker, z.B. Fructose, Antioxidationsmittel, wie solche, die für die Konservierung von Lebensmitteln Verwendung finden, z.B. Flavonoide (Quercetin), β-Karotinoide (Vitamin A), α-Tocopherol (Vitamin E), phenolische Reduktionsmittel, wie etwa Propyl- oder Octylgallat (Triphenol), Butylhydroxyanisol (BHA) oder Butylhydroxytoluol (BHT), andere Konservierungsmittel für Lebensmittel, wie Nitrite, Propionsäuren, Sorbinsäuresalze oder Sulfate. Weiter geeignete Reduktionsmittel sind SO₂, Sulfite, Bisulfite, Thiosulfate, Mercaptane, Hydroxylamine und Hydrazin und Derivate davon, Hydrazon und Derivate davon, Amine und Derivate davon, Phenole und Enole. Das Reduktionsmittel kann ferner ein Übergangmetall M(0) im Oxidationszustand Null sein. Des Weiteren kann eine Kombination an Reduktionsmittel verwendet werden.

In diesem Zusammenhang wird Bezug genommen auf das US-Patent Nr. 2,386,358, dessen Inhalt hiermit in diese Anmeldung aufgenommen wird.

Bevorzugt ist das Reduktionsmittel unter Zinn(II)salzen von Carbonsäuren, wie z.B. Zinn(II)octanoat, insbesondere Zinn(II)-2-ethylhexanoat, phenolischen Reduktionsmitteln oder Ascorbinsäure-Derivaten ausgewählt, wobei Zinn(II)octanoat, insbesondere Zinn(II)-2-ethylhexanoat, besonders bevorzugt ist.

Als radikalisch polymerisierbare Verbindungen sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Veröffentlichungen EP 1 935 860 A1, DE 195 31 649 A1, WO 02/051903 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Veröffentlichungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglykolmono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit erfindungsgemäßen Initiatorsystem polymerisiert werden können, enthalten, zum Beispiel reaktive Gruppen, die von der Itaconsäure, Citraconsäure und allylischen Gruppen und dergleichen abgeleitet sind.

In einer bevorzugten Ausführungsform der Erfindung enthält die Reaktionsharz-Zusammensetzung weitere niederviskose, radikalisch polymerisierbare Verbindungen als Reaktivverdünner für die radikalisch polymerisierbare Verbindung, um deren Viskosität falls erforderlich, anzupassen.

Geeignete Reaktivverdünner sind in den Veröffentlichungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N, N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.10.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen.

In einer weiteren Ausführungsform der Erfindung enthält die Reaktionsharz-Zusammensetzung ferner einen Inhibitor.

Als Inhibitor sowohl für die Lagerstabilität der radikalisch polymerisierbaren Verbindung und damit auch des Harzbestandteils als auch zur Einstellung der Gelzeit sind die für radikalisch polymerisierbare Verbindungen üblicherweise als Inhibitoren verwendeten stabilen Radikale, wie N-Oxyl-Radikale geeignet, wie sie dem Fachmann bekannt sind. Phenolische Inhibitoren, wie sie sonst üblicherweise in radikalisch härtbaren Harzzusammensetzungen Verwendung finden, können hier nicht verwendet werden, da die Inhibitoren als Reduktionsmittel mit dem Kupfer(II)salz reagieren würden, was sich nachteilig auf die Lagerstabilität und die Gelzeit auswirken würde.

Als N-Oxyl-Radikale können beispielsweise solche verwendet werden, wie sie in der DE 199 56 509 A1 beschrieben sind. Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, oder Indolin- Nitroxidradikale, wie 2,3-Dihydro-2,2-diphenyl-3-(phenylimino)-1H-indol-1-oxylnitroxid, oder β-phosphorylierte Nitroxidradikale, wie 1-(Diethoxyphosphinyl)-2,2-dimethylpropyl-1,1-dimethylmethyl-nitroxid, und dergleichen.

Die Reaktionsharz-Zusammensetzung kann ferner anorganische Zuschlagstoffe enthalten, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Denkbare Additive sind Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktionsharz-Zusammensetzung enthalten sein.

In dieser Hinsicht wird Bezug genommen auf die Veröffentlichungen WO 02/079341 A1 und WO 02/079293 A1 sowie WO 2011/128061 A1, deren Inhalt hiermit in diese Anmeldung aufgenommen wird.

Um ein lagerstabiles System bereitzustellen, wird wie bereits erwähnt der Kupfer(I)-Komplex erst *in-situ,* d.h. beim Mischen der entsprechenden Reaktanten, aus einem geeigneten Kupfer(II)salz, dem Stickstoff-enthaltenden Liganden und einem geeigneten Reduktionsmittel erzeugt. Dementsprechend ist es erforderlich, das Kupfer(II)salz und das Reduktionsmittel reaktionsinhibierend voneinander zu trennen. Dies geschieht gewöhnlich dadurch, dass das Kupfer(II)salz in einer ersten Komponente und das Reduktionsmittel in einer von der ersten Komponenten getrennten zweiten Komponente gelagert wird. Dementsprechend ist ein weiterer Gegenstrand der Erfindung ein Zwei- oder Mehrkomponenten-System, welches die beschriebene Reaktionsharz-Zusammensetzung enthält.

In einer Ausführungsform der Erfindung werden die Bestandteile der Reaktionsharz-Zusammensetzung räumlich so angeordnet, dass das Kupfer(II)salz und das Reduktionsmittel getrennt voneinander vorliegen, d.h. in jeweils einer getrennt voneinander angeordneten Komponente. Damit wird verhindert, dass die Bildung der reaktiven Spezies, nämlich des reaktiven Kupfer(I)-Komplexes und damit die Polymerisation der radikalisch polymerisierbaren Verbindung bereits bei der Lagerung einsetzt.

Ferner ist bevorzugt, auch den Initiator vom Kupfer(II)salz zu trennen, da nicht ausgeschlossen werden kann, dass geringen Mengen an Kupfer(I)salz vorhanden sind, da das Kupfer(II)salz im Gleichgewicht mit dem entsprechenden Kupfer(I)salz vorliegen kann, welches zusammen mit dem Initiator eine schleichende Initiierung verursachen könnte. Dies würde zu einer vorzeiten zumindest teilweisen Polymerisierung (Gelierung) der radikalisch polymerisierbaren Verbindung und damit zu einer verminderten Lagerstabilität führen. Des Weiteren hätte dies einen negativen Einfluss auf die voreingestellte Gelzeit der Zusammensetzung, was sich in einer Gelzeitdrift äußern würde. Dies hat den Vorteil, dass auf den Einsatz von hochreinen und damit sehr teuren Kupfer(II)salzen verzichtet werden kann.

Der Initiator kann dabei zusammen mit dem Reduktionsmittel in einer Komponente, wie bei einem Zweikomponenten-System, oder als eigenständige Komponente, wie bei einem Dreikomponenten-System, gelagert sein.

Die Erfinder haben beobachtet, dass bei bestimmten Stickstoff-enthaltenden Liganden insbesondere bei der Verwendung von Methacrylaten als radikalisch polymerisierbare Verbindungen auch ohne Anwesenheit von Initiator und Reduktionsmittel eine heftige Reaktion erfolgt. Die scheint dann aufzutreten, wenn es sich um einen Liganden mit tertiären Aminogruppen handelt und der Ligand am Stickstoffatom einen Alkylrest mit α-H-Atomen enthält.

Je nach Auswahl des Stickstoff-enthaltenden Liganden können der Ligand und das Kupfer(II)salz über einen längeren Zeitraum lagerstabil in einer Komponente enthalten sein, insbesondere bei den bevorzugten Aminen mit primären Aminogruppen.

Einer bevorzugte Ausführungsform betrifft ein Zweikomponenten-System, welches eine Reaktionsharz-Zusammensetzung enthält, die eine radikalisch polymerisierbare Verbindung, einen α-Halogencarbonsäureester, ein Kupfer(II)salz, einen Stickstoff-enthaltenden Liganden, ein Reduktionsmittel, einen Inhibitor, gegebenenfalls mindestens einen Reaktivverdünner und gegebenenfalls anorganische Zuschlagstoffe umfasst. Dabei sind in einer ersten Komponente, der A-Komponente, das Kupfer(II)salz und der Stickstoff-enthaltende Ligand und in einer zweiten Komponente, der B-Komponente, der α-Halogencarbonsäureester und das Reduktionsmittel enthalten, wobei die beiden Komponenten getrennt voneinander gelagert sind, um eine Reaktion der Bestandteile untereinander vor deren Vermischen zu verhindern. Die radikalisch polymerisierbare Verbindung, der Inhibitor, der Reaktivverdünner sowie die anorganischen Zuschlagstoffe sind auf die A- und B-Komponente verteilt.

Die Reaktionsharz-Zusammensetzung kann in einer Patrone, einem Gebinde, einer Kapsel oder einem Folienbeutel, welcher zwei oder mehrere Kammern umfasst, die voneinander getrennt sind und in denen das Kupfer(II)salz und das Reduktionsmittel bzw. das Kupfer(II)salz und das Reduktionsmittel sowie der Ligand reaktionsinhibierend getrennt voneinander enthalten sind, enthalten sein.

Die erfindungsgemäße Reaktionsharz-Zusammensetzung findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Ein weiterer Gegenstand der Erfindung ist die Verwendung der Reaktionsharz-Zusammensetzung als Bindemittel, insbesondere zur Befestigung von Verankerungsmitteln in Bohrlöchern verschiedenen Untergrunds und zum baulichen Kleben.

Die vorliegende Erfindung betrifft auch die Verwendung der oben definierten Reaktionsharzmörtel-Zusammensetzung für Bauzwecke, umfassend das Aushärten der Zusammensetzung durch Mischen des Kupfer(II)salzes mit dem Reduktionsmittel oder des Kupfer(II)salzes mit dem Reduktionsmittel und dem Liganden.

Stärker bevorzugt wird die erfindungsgemäße Reaktionsharzmörtel-Zusammensetzung zum Befestigen von Gewindeankerstangen, Bewehrungseisen, Gewindehülsen und Schrauben in Bohrlöchern in verschiedenen Untergründen verwendet, umfassend das Mischen des Kupfer(II)salzes mit dem Reduktionsmittel oder des Kupfer(II)salzes mit dem Reduktionsmittel und dem Liganden, Einbringen der Mischung in das Bohrloch, Einführen der Gewindeankerstangen, der Bewehrungseisen, der Gewindehülsen und der Schrauben in die Mischung in dem Bohrloch und Aushärten der Mischung.

Die Erfindung wird anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

Zur Herstellung der nachfolgenden Beispielformulierungen wurden folgende Bestandteile verwendet.

| **Abkürzung** | **Bezeichnung** |
|---|---|
| UMA-Präpolymer | Ein aus MDI und HPMA hergestelltes Präpolymer gemäß DE4111828; verdünnt mit 35 Gew.-% BDDMA |
| MDI | Diphenylmethandiisocyanat |
| BDDMA | 1,4-Butandioldimethacrylat |
| HPMA | Hydroxypropylmethacrylat |
| THFMA | Tetrahydrofurfurylmethacrylat |
| BiBEE | α-Bromisobutyrsäureethylester |
| BiEM | 2-(2-Bromo-isobutyryloxy)-ethylmethacrylat |
| BiDipenta | Dipentaerythritol-hexakis(2-bromoisobutyrat) |
| BiE | Ethylen-bis(2-bromoisobutyrat) |
| BiPenta | Pentaerythritol-tetrakis(2-bromoisobutyrat) |
| Bipy | 2,2'-Bipyridin |
| PMDETA | N,N,N',N",N"-Pentamethyldiethylentriamin |
| phen | 1,10-Phenanthrolin |
| HMTETA | 1,1,4,7,10,10-Hexamethyltriethylentetram in |
| Me6TREN | (Tris[2-(dimethylamino)ethyl]amin) |
| TPMA | (Tris(2-pyridylmethyl)amin) |
| DMbipy | 6,6-Dimethyl-2,2-dipyridyl |
| Sn-octoat | Sn(II)ethylhexanoat |
| VC6P | Ascorbinsäure-6-palmitat |
| Fe 7/8 | Octasoligen Eisen 7/8 |
| Tempol | 4-Hydroxy-2,2,6,6-tetramethylpiperidinoxyl |

### Beispiele 1 bis 7

Um die Anwendbarkeit des Initiatorsystems auf kalthärtende Methacrylatester und die Möglichkeit der Einstellung der Gelzeit mittels eines Inhibitors zu beurteilen, wurden Modellmischungen aus einem Monomer zunächst ohne UMA-Präpolymer hergestellt.

### Herstellung von Modellmischungen

Das Cu-Salz und ggf. der Inhibitor werden in einem Polypropylenbecher im Monomer ggf. unter Erwärmen gelöst. In der homogenen Lösung löst man bei Raumtemperatur den Liganden und den Initiator. Sobald eine homogene Lösung vorliegt, wird die Polymerisation durch die Zugabe des Reduktionsmittels (30 Sekunden kräftig einrühren) gestartet. Die jeweils eingesetzten Mengen sind in Tabelle 1 aufgeführt. Tabelle 1 zeigt auch die Beobachtung nach dem Vermischen aller Komponenten.

**Tabelle 1: Zusammensetzung der Modellmischungen der Beispiele 1 bis 7 und Beobachtungen**

| **Beispiel** | | **1** | **2** | **3** | **4** | **5** | **6** | **7** |
|---|---|---|---|---|---|---|---|---|
| Monomer | BDDMA | 25 g | 25 g | 25 g | 12,33 g | 12,33 g | 12,33 g | 12,33 g |
| | HPMA | | | | 12,33 g | 12,33 g | 12,33 g | 12,33 g |
| | THFMA | | | | 12,33 g | 12,33 g | 12,33 g | 12,33 g |
| Cu-Salz | Cu(II)ethyl-hexanoat | 0,1 g | 0,1 g | 0,1 g | 0,1 g | 0,1 g | 0,1 g | 0,1 g |
| Initiator | BiBEE | 0,35 g | 0,35 g | 0,056 g | | | | |
| | BiEM | | | | *0,086 g* | | | |
| | BiDipenta | | | | | *0,086 g* | | |
| | BiE | | | | | | *0, 055 g* | |
| | BiPenta | | | | | | | *0, 056 g* |
| Ligand | PMDETA bipy | 0,12 g | 0,12 g | 0,12 g | 0,04 g | 0,04 g | 0,04 g | 0,04 g |
| *Reduktionsmittel* | *Sn-octoat* | 0,12 g | 0,12 g | 0,12 g | 0,12 g | 0,12 g | 0,12 g | 0,12 g |
| Inhibitor | Tempol | --- | 0,01 g | 0,01 g | --- | --- | --- | --- |
| Beobachtung ¹⁾ | Polymerisation nach | 4 min ²⁾ | 15 min ⁴⁾ | ca. 50 min | 3 Minuten | 3,5 min | 2,5 min | 2,5 min |
| | | 6 min ³⁾ | 16 min ⁵⁾ | | | | | |
| | Hitzeentwicklung | | | deutlich | (168°C), | (167°C), | (169°C), | (168°C), |

| | | | | | | | | |
|---|---|---|---|---|---|---|---|---|
| ¹⁾ in allen Fällen bildet sich ein glasartig-sprödes, hartes Polymer ²⁾ heftige Polymerisation ³⁾ abgeschlossen ⁴⁾ Wärmeentwicklung und Gelierung ⁵⁾ heftige Polymerisation | | | | | | | | |

Beispiel 3 diente als Grundlage für die Bestimmung der Gelzeit und der Auszugsfestigkeit. Dazu wurde eine Modellmischung mit der vierfachen Menge der in Tabelle 1 angegebenen Bestandteile des Beispiels 3 hergestellt und die Gelzeit sowie die Auszugsfestigkeit wie nachfolgend beschrieben, bestimmt.

### Bestimmung der Gelzeit

Die Bestimmung der Gelzeit der Modellmischungen erfolgt mit einer handelsüblichen Vorrichtung (GELNORM®-Gel Timer) bei einer Temperatur von 25°C. Hierzu werden alle Bestandteile gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Wärmeentwicklung der Probe wird gegen die Zeit aufgetragen. Die Auswertung erfolgt gemäß DIN16945. Die Gelzeit ist die Zeit, bei der ein Temperaturanstieg um 10K erreicht wird, hier von 25°C nach 35°C.
- Zeit bis 35 °C: 22,5 Minuten
- Zeit bis Peak: 27 Minuten
- Peaktemperatur: 183°C

### Bestimmung der Auszugsfestigkeit

Eine M8-Stahlgegewindestange wird in einer Stahlhülse mit 10mm-Innendurchmesser und Innengewinde, Einbindetiefe 40 mm, mit der Mischung gesetzt und nach 24 h bei Raumtemperatur bis zum Versagen auf der Zugprüfmaschine mit 3 mm/min ausgezogen und die Mittelwerte von 5 Messungen angegeben:
- Maximale Verbundspannung: 18,9 ± 0,90 N/mm²
- Verschiebung bei Versagen: 1,13 ± 0,08 mm

Anhand der Beispiele 1 bis 3 wird ersichtlich, dass mit den Modellmischungen eine heftige und schnelle Polymerisation von Methacrylaten bei Raumtemperatur erreicht wird, welche mit einem Inhibitor verzögert werden kann und auch noch nach einer langen Offenzeit (Gelzeit ca. 22 Minuten) eine gute Polymerisation (Peaktemperatur ca. 180°C) ergibt sowie zu beachtlichen mechanischen Eigenschaften (Verbundspannung ca. 19 N/mm² bei nur geringer Verschiebung) führt. Dies deutet darauf hin, dass es möglich ist, bei den erfindungsgemäßen Zusammensetzungen die Gelzeit gezielt einzustellen und auf die jeweiligen Anwendungsbedürfnisse anzupassen.

Die Beispiele 1 und 4 bis 7 zeigen deutlich, dass sich die Polymerisation mit diversen Initiatoren bei Raumtemperatur gut auslösen lässt.

### Beispiele 8 bis 10

Die Modellmischungen werden analog den Beispielen 1 bis 7 hergestellt, wobei der Inhibitor in unterschiedlichen Konzentrationen eingesetzt wurde.

Anhand der folgenden Beispiele wird aufgezeigt, dass es möglich ist, den Start der Polymerisation durch die Zugabe eines geeigneten Inhibitors zu verzögern und somit die Gelzeit einer Modellmischung über die Menge an zugegebenem Inhibitor zu steuern.

**Tabelle 2: Zusammensetzung der Modellmischungen der Beispiele 8 bis 10**

| **Beispiel** | | **8** | **9** | **10** |
|---|---|---|---|---|
| Monomer | BDDMA | 12,5 g | 12,5 g | 12,5 g |
| | HPMA | 16,0 g | 16,0 g | 16,0 g |
| Cu-Salz | Cu(II)ethyl-hexanoat | 0,10 g | 0,10 g | 0,10 g |
| Initiator | BiBEE | 0,06 g | 0,06 g | 0,06 g |
| Ligand | PMDETA | 0,03 g | 0,03 g | 0,03 g |
| Reduktions mittel | Sn(II)ethyl-hexanoat | 0,12 g | 0,12 g | 0,12 g |
| *Inhibitor* | Tempol | --- | 0,005 g | 0,01 g |

In Beispiel 8 setzte eine starke Polymerisation nach 5 Minuten ein und bei Beispiel 9 nach 11 Minuten, wohingegen die Polymerisation in Beispiel 10 zu stark inhibiert wurde und keine Polymerisation beobachtet wurde.

Die Beispiele 8 bis 10 zeigen somit, dass der Start der Polymerisation durch die Inhibitormenge gesteuert werden kann und bei hoher Inhibitorkonzentration zum Erliegen kommt.

### Beispiele 11 bis 19

Die Modellmischungen werden analog den Beispielen 1 bis 7 hergestellt, wobei weitere Reduktionsmittel (Beispiele 11 und 12) oder unterschiedliche Liganden (Beispiele 13 - 19) eingesetzt wurden. Die Zusammensetzungen sind aus der Tabelle 3 ersichtlich.

**Tabelle 3: Zusammensetzung der Modellmischungen der Beispiele 11, 13 und 14 und der erfindungsgemäßen Harzmischungen der Beispiele 12 und 15 bis 19**

| **Beispiel** | | **11** | **12** | **13 (1)** | **14** | **15** | **16** | **17** | **18** | **19** |
|---|---|---|---|---|---|---|---|---|---|---|
| Monomer | BDDMA | 25,0 g | 5,3 g | 25,0 g | 12,5 g | 5,25 g | 5,25 g | 5,25 g | 5,25 g | 5,25 g |
| | HPMA | | 11,4 g | | 16,0 g | 11,4 g | 11,4 g | 11,4 g | 11,4 g | 11,4 g |
| | UMA-Präpol. | | 17,5 g | | | 17,5 g | 17,5 g | 17,5 g | 17,5 g | 17,5 g |
| Cu-Salz | Cu(II)ethyl-hexanoat | 0,10 g | 0,1 g | 0,10 g | 0,10 g | 0,10 g | 0,10 g | 0,10 g | 0,10 g | 0,10 g |
| Initiator | BiBEE | 0,06 g | 0,06 g | 0,35 g | 0,06 g | 0,06 g | 0,06 g | 0,06 g | 0,06 g | 0,06 g |
| Ligand | PMDETA | 0,03 g | | *0,12g* | | | | | | |
| | Bipy | | 0,025 g | | *0,01 g* | | | | | |
| | *Phen* | | | | | *0,02 g* | | | | |
| | HMTETA | | | | | | *0,03 g* | | | |
| | *Me6TREN* | | | | | | | *0,059 g* | | |
| | *TPMA* | | | | | | | | *0,075 g* | |
| | *DMbipy* | | | | | | | | | *0,048 g* |
| *Reduktions mittel* | Fe 7/8 | *0,1 g* | | | | | | | | |
| | *VC6P* | | *0,16 g* | | | | | | | |
| | *Sn-octoat* | | | 0,12 g | 0,12 g | 0,12 g | 0,12 g | 0,12 g | 0,12 g | 0,12 g |
| Inhibitor | Tempol | --- | --- | --- | --- | --- | --- | --- | --- | --- |
| Kommentar ⁶⁾ | Polymerisation nach | 45 sek. | 8 min | 45 s | 11 min | 10 min | 7 min | 16 min | 6,5 min | ca. 1,5 h |
| | Hitzeentwicklung | stark | 160°C | stark | 172°C | 165°C | 167°C | 159°C | 158°C | ca. 130°C |

| | | | | | | | | | | |
|---|---|---|---|---|---|---|---|---|---|---|
| ⁶⁾ in allen Fällen bildet sich ein hartes und sprödes Polymer | | | | | | | | | | |

Die Beispiele 11 bis 19 zeigen deutlich, dass verschiedene Amine, wie 2,2'-Bipyridin und 1,10-Phenanthrolin, als Liganden für die erfindungsgemäße Zusammensetzung geeignet sind. Wie aus einem Vergleich des Beispiele 1 mit den Beispielen 14 und 15 zeigt, kann der Start der Polymerisation und damit die Gelzeit auch über die Menge des Liganden beeinflusst werden.

### Beispiele 20 bis 22

Es werden anorganisch gefüllte Zweikomponenten-Systeme mit den in Tabelle 4 gezeigten Zusammensetzungen hergestellt und verschiedene Eigenschaften der erhaltenen Massen untersucht.

Zunächst werden die beiden Komponenten A und B getrennt hergestellt, indem zuerst die jeweiligen aus Tabelle 4 ersichtlichen Bestandteile des Initiatorsystems in der Monomermischung gelöst werden, dann werden der Füllstoff und das Additiv eingerührt, wobei pastöse, fließfähige Komponenten erhalten werden. Die Aushärtung wird durch gutes Vermischen der beiden Komponenten A und B gestartet.

**Tabelle 4: Zusammensetzung der Modellmischungen der Beispiele 20 und 21 und des erfindungsgemäßen Beispiels 22**

| **Beispiel** | | | **20** | **21** | **22** |
|---|---|---|---|---|---|
| A-Komponente | Monomere | BDDMA | 6,5 g | 6,25 g | 47 g |
| | | HPMA | 8,0 g | 8,01 g | 100 g |
| | | UMA-Präpol. | | | 155 g |
| | Cu-Salz | Cu(II)ethylhexanoat | 0,1 g | 0,10 g | 1,11 g |
| | Initiator | BiBEE | | 0,06 g | 3,95 g |
| | Ligand | PMDETA 2,2'-bipy | | 0,025 g | 0,44 g |
| | Füllstoff | Millisil W12 ⁷⁾ | 16,0 g | 16,0 g | 138 g |
| | | Quarzsand F32 ⁸⁾ | | | 288 g |
| | Additiv | Cab-O-Sil TS-720 ⁹⁾ | 0,9 g | 0,9 g | 18,7 g |
| B-Komponente | Monomere | BDDMA | 6,5 g | 6,0 g | 46 g |
| | | HPMA | 8,0 g | 8,0 g | 99,5 g |
| | | UMA-Präpol. | | | 153 g |
| | Initiator | BiBEE | 0,06 g | | |
| | Ligand | PMDETA | 0,03 g | | |
| | Reduktionsmittel | Sn(II)ethylhexanoat | 0,12 g | 0,12 g | 8,2 g |
| | Inhibitor | Tempol | | | 0,01 g |
| | Füllstoff | Millisil W12 | 16,0 g | 16,0 g | 136 g |
| | | Quarzsand F32 | | | 285 g |
| | Additiv | Cab-O-Sil TS-720 | 0,9 g | 0,9 g | 18,5 g |

| | | | | | |
|---|---|---|---|---|---|
| ⁷⁾ Quarzmehl; mittlere Korngröße 16 µm ⁸⁾ Quarzsand; mittlere Korngröße 0,24 mm ⁹⁾ pyrogene amorphe Kieselsäure | | | | | |

Die Zusammensetzung aus Beispiel 20 härtet nach ca. 9 Minuten unter starker Wärmeentwicklung zu einer harten, grauen Masse aus. Die Zusammensetzung aus Beispiel 21 härtet nach 5 Minuten unter starker Wärmeentwicklung (144°C) aus.

Zur Bestimmung diverser Eigenschaften eine erfindungsgemäßen anorganisch gefüllten Reaktionsharz-Zusammensetzung werden die Komponenten des Beispiels 22 werden in eine Doppelkartusche mit dem Volumenverhältnis A:B = 3:1 abgefüllt und für die Messungen durch einen handelsüblichen Statikmischer ausgebracht.

Die Gelzeit der so erhaltenen Masse wurde gemäß obiger Beschreibung bestimmt:
- Zeit bis 35 °C: 2,5 Minuten
- Zeit bis Peak: 3,3 Minuten
- Peaktemperatur: 112°C

### Auszugsfestigkeit - Stahlhülse

Eine M8-Stahlgewindestange wird in einer Stahlhülse mit 10mm-Innendurchmesser und Innengewinde, Einbindetiefe 40 mm, mit der Masse gesetzt und nach 24 h bei Raumtemperatur bis zum Versagen auf der Zugprüfmaschine mit 3 mm/min ausgezogen:
- Verbundspannung: 26,3 N/mm²
- Verschiebung: 0,97 mm

### Auszugsversuche aus Beton

Jeweils 3 Ankerstangen M12x72 werden in Beton in trockene und gereinigte Bohrlöcher mit 14 mm Durchmesser gesetzt und nach 24 h Aushärtung bis zum Versagen ausgezogen und die folgenden Versagenslasten bestimmt:
- Raumtemp.: 28,9 ± 3,2 kN
- -5°C: 10,4 ± 2,3 kN
- +40°C: 34,4 ± 5,8 kN

### Haftabzugsversuche von Beton

Auf geschnittenen, trockenen Betonoberflächen werden Metallstempel mit dem Durchmesser 50 mm mit einer 1 mm dicken Schicht der Masse verklebt und nach 24 h bei Raumtemperatur die Haftabzugswerte bestimmt (Mittelwert aus 2 Messungen):
- Haftabzugskraft 1,8 N/mm²

Die Beispiele 20 bis 22 zeigen, dass auch in gefüllten Systemen eine Polymerisation und damit eine Härtung der Masse bei Raumtemperatur erfolgt. Dementsprechend eignet sich die erfindungsgemäße Reaktionsharz-Zusammensetzung zur Bereitstellung von peroxidfreien, radikalisch härtbaren Klebstoffen, Dübelmassen, Formmassen und dergleichen.

## Patentansprüche

1. Reaktionsharz-Zusammensetzung mit einem Harzbestandteil, der eine radikalisch polymerisierbare Verbindung enthält, und einem Initiatorsystem, das einen α-Halogencarbonsäureester und ein Katalysatorsystem, welches ein Kupfer(I)salz und wenigstens einen Stickstoff-enthaltenden Liganden umfasst, enthält.

2. Reaktionsharz-Zusammensetzung nach Anspruch 1, wobei der α-Halogensäureester unter Verbindungen der allgemeinen Formel (I) ausgewählt ist: 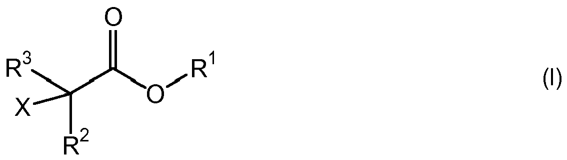 in der
X Chlor, Brom oder Iod, bevorzugt Chlor oder Brom, besonders bevorzugt Brom bedeutet;
R¹ für eine geradkettige oder verzweigte, gegebenenfalls substituierte C₁-C₂₀-Alkylgruppe oder eine Arylgruppe steht; oder
für den Rest eines acylierten, verzweigten, dreiwertigen Alkohols, den Rest eines vollständig oder partiell acylierten, linearen oder verzweigten, vierwertigen Alkohols, den Rest eines vollständig oder partiell acylierten, linearen fünf-oder sechswertigen Alkohols, den Rest einer vollständig oder partiell acylierten, linearen oder cyclischen C₄-C₆-Aldose oder C₄-C₆-Ketose oder den Rest eines vollständig oder partiell acylierten Disaccharids steht, und Isomere dieser Verbindungen;
R² und R³ unabhängig voneinander für Wasserstoff, eine C₁-C₂₀-Alkylgruppe, eine C₃-C₈-Cycloalkylgruppe, C₂-C₂₀-Alkenyl-oder -Alkinylgruppe, Oxiranylgruppe, Glycidylgruppe, Arylgruppe, Heterocyclylgruppe, Aralkylgruppe oder Aralkenylgruppe stehen.

3. Reaktionsharz-Zusammensetzung nach Anspruch 2, wobei der α-Halogencarbonsäureester ein C₁-C₆-Alkylester einer α-Halo-C₁-C₆-Carbonsäure ist.

4. Reaktionsharz-Zusammensetzung nach Anspruch 3, wobei die α-Halo-C₁-C₆-Carbonsäure eine α-Brom-C₁-C₆-Carbonsäure ist.

5. Reaktionsharz-Zusammensetzung nach einem der vorhergehenden Ansprüche, wobei das Kupfer(I)salz *in-situ* aus einem Kupfer(II)salz und einem Reduktionsmittel gebildet wird.

6. Reaktionsharz-Zusammensetzung nach Anspruch 5, wobei das Kupfer(II)salz und das Reduktionsmittel reaktionsinhibierend voneinander getrennt sind.

7. Reaktionsharz-Zusammensetzung nach einem der vorhergehenden Ansprüche, wobei das Kupfer(II)salz in organischen Lösungsmitteln löslich ist.

8. Reaktionsharz-Zusammensetzung nach Anspruch 7, wobei das Kupfer(II)salz aus der Gruppe ausgewählt ist, die aus Cu(II)(PF₆)₂, CuX₂, mit X = Cl, Br, I, Cu(OTf)₂ und Cu(II)-Carboxylaten besteht.

9. Reaktionsharz-Zusammensetzung nach einem der vorhergehenden Ansprüche, wobei das Reduktionsmittel aus der Gruppe ausgewählt ist, die aus Ascorbinsäure und deren Derivaten, Zinn(II)-Carboxylaten sowie phenolischen Reduktionsmitteln besteht.

10. Reaktionsharz-Zusammensetzung nach einem der vorhergehenden Ansprüche, wobei der Stickstoff-enthaltende Ligand zwei oder mehr Stickstoffatome enthält und mit Kupfer(I) einen Chelatkomplex bilden kann.

11. Reaktionsharz-Zusammensetzung nach Anspruch 10, wobei der Stickstoff-enthaltende Ligand unter Aminoverbindungen mit mindestens zwei primären, sekundären und/oder tertiären Aminogruppen oder Aminoverbindungen mit mindestens zwei heterocyclischen Stickstoffatomen ausgewählt ist.

12. Reaktionsharz-Zusammensetzung nach Anspruch 10 oder 11, wobei der Stickstoff-enthaltende Ligand im Überschuss vorhanden ist.

13. Reaktionsharz-Zusammensetzung nach einem der vorhergehenden Ansprüche, wobei die radikalisch polymerisierbare Verbindung ein ungesättigtes Polyesterharz, ein Vinylesterharz und/oder ein Vinylester-Urethanharz ist.

14. Reaktionsharz-Zusammensetzung nach einem der vorhergehenden Ansprüche, wobei die radikalisch polymerisierbare Verbindung ein (Meth)acrylat-funktionalisiertes Harz ist und der α-Halogencarbonsäureester ein α-Halogencarbonsäureester der Isobutansäure oder Propansäure ist.

15. Reaktionsharz-Zusammensetzung nach einem der vorhergehenden Ansprüche, wobei die Zusammensetzung ferner einen nicht-phenolischen Inhibitor enthält.

16. Reaktionsharz-Zusammensetzung nach Anspruch 15, wobei der nicht-phenolische Inhibitor ein stabiles N-Oxyl-Radikal ist.

17. Reaktionsharz-Zusammensetzung nach einem der vorhergehenden Ansprüche, wobei der Harzbestandteil ferner mindestens einen Reaktivverdünner umfasst.

18. Reaktionsharz-Zusammensetzung nach einem der vorhergehenden Ansprüche, wobei die Zusammensetzung ferner anorganische Zuschlagstoffe enthält.

19. Reaktionsharz-Zusammensetzung nach Anspruch 18, wobei der anorganische Zuschlagstoff ein Additiv und/oder ein Füllstoff ist.

20. Zwei- oder Mehrkomponenten-System umfassend eine Reaktionsharz-Zusammensetzung nach einem der Ansprüche 1 bis 19.

21. Zweikomponenten-System nach Anspruch 20, wobei in einer ersten Komponente das Kupfer(II)salz und der Stickstoff-enthaltende Ligand und in einer zweiten Komponente der α-Halogencarbonsäureester und das Reduktionsmittel enthalten sind, die radikalisch polymerisierbare Verbindung und der Inhibitor auf die beiden Komponenten verteilt sind und die beiden Komponenten reaktionsinhibierend getrennt voneinander sind.

22. Zweikomponenten-System nach Anspruch 21, wobei die Reaktionsharz-Zusammensetzung ferner mindestens einen Reaktivverdünner und/oder anorganischen Zuschlagstoffe, die in einer oder in beiden Komponenten enthalten sind, umfasst.

23. Verwendung einer Reaktionsharz-Zusammensetzung nach einem der Ansprüche oder eines Zwei- oder Mehrkomponenten-Systems nach einem der Ansprüche für bauliche Zwecke.
